# EUROPEAN PATENT APPLICATION

(11) **EP 4 570 406 A1**
(43) Date of publication of application: **18.06.2025**
(21) Application number: 23215646.3
(22) Date of filing: 11.12.2023
(51) Int. Cl.: B23G 1/22, B23G 5/04, B23B 27/06, F16L 15/00, G05B 19/00

(54) **CUTTING TOOL AND METHOD FOR CUTTING A THREAD**

(71) Applicant: Tenaris Connections B.V., 1019 GM Amsterdam (NL)
(72) Inventor: Barbero, Pablo, 1019 GM Amsterdam (NL)
(74) Representative: Boult Wade Tennant LLP

(57) **Abstract**

The present invention relates to a method for cutting a thread and a cutting tool (100) and system for use in the method. The cutting tool (100) for cutting a helical thread on a pipe (50) comprises one or more cutting teeth (110). Each of the one or more cutting teeth (110) has a stab flank cutting edge (112A) for cutting a stab flank (10) and has a load flank cutting edge (112B) for cutting a load flank (20).

## Description

The present invention relates to a method for cutting a thread and a cutting tool and system for use in the method. Preferably, the present invention relates to a method for cutting a varying-width thread and a cutting tool and system for cutting a varying-width thread.

Cutting tools are known for use with computer-controlled lathes to cut threads on the ends of pipe to provide threaded pipes for forming long strings of pipes for use in the oil and gas industry.

It is an object of the present disclosure to provide methods and apparatus for improving the accuracy of such cutting processes. Through extensive investigation, the inventors have discovered that a conventional method of cutting a thread involves inaccuracies caused by the misalignment of the various cutting tools used to cut the thread and so have arrived at the present invention.

Accordingly, there is provided, in a first aspect, a cutting tool for cutting a helical thread on a pipe, comprising a cutting tool having one or more cutting teeth, wherein each of the cutting teeth: has a stab flank cutting edge for cutting a stab flank; and has a load flank cutting edge for cutting a load flank.

Such a cutting tool can be used to cut both flanks of the thread and so can provide a more accurate thread because it is not needed to replace the cutting tool with another between passes. In some embodiments, different cutting tools may carry out initial passes, with the cutting tool described herein to cut later passes and, in some cases, the final pass.

Preferably, the cutting tool has two or more teeth, more preferably three or more teeth, and most preferably four or more teeth.

Preferably, when two or more teeth are provided, each of the stab flank cutting edges has the same height; and each of the load flank cutting edges has the same height.

Preferably, when two or more teeth are provided, each of the stab flank cutting edges has the same geometry; and each of the load flank cutting edges has the same geometry.

Preferably, when two or more teeth are provided, each of the stab flank cutting edges are equally spaced; and each of the load flank cutting edges are equally spaced.

Optionally, when two or more teeth are provided, the spacing between the stab flank cutting edges is different from the spacing between the load flank cutting edges. Preferably, the spacing between the stab flank cutting edges is less than the spacing between the load flank cutting edges. Such a cutting tool can be used to cut a varying-width thread.

Optionally, each stab flank cutting edge is negatively inclined. Optionally, each load flank cutting edge is negatively inclined. Such a cutting tool can be used to cut a varying-width thread with one or two hooked flanks.

In accordance with a second aspect, there is provided a system comprising a cutting tool as defined above, a computer-controlled machine, such as a lathe,, and a controller programmed to control the machine to cut a helical thread on a pipe by engaging the pipe with the cutting tool during relative motion of the pipe and cutting tool, the relative motion including a rotation about the longitudinal axis and an axial displacement with respect to the longitudinal axis, wherein: the relative motion is controlled by the controller such that a tooth of the cutting tool cuts a helical thread on the pipe by cutting a stab flank with a stab flank cutting edge of a cutting tooth and cutting a load flank with a load flank cutting edge of the same cutting tooth.

Such a system can be used to cut a more accurate thread.

In accordance with a third aspect, there is provided a method of cutting a helical thread on a pipe, comprising the steps of: providing a pipe having a longitudinal axis; installing a cutting tool in a computer-controlled machine, such as a lathe; cutting a helical thread on the pipe by cutting at least a portion of a stab flank with a stab flank cutting edge of a cutting tooth and cutting at least a portion of a load flank with a load flank cutting edge of the same cutting tooth.

Such a method can be used to cut a more accurate thread, since the cutting tool need not be uninstalled from the machine after a flank is cut with a new cutting tool installed to cut the other flank. The replacement of the cutting tool in this conventional way can lead to small misalignments as between the two tools. The presently disclosed method does not involve any adjustment of the cutting tool relative to the machine and so can enables a much higher degree of registration as between multiple cutting passes.

For a better understanding, and to show how the same may be put into effect, reference will now be made, by way of example only, to the accompanying drawings in which:
Figure 1A shows a prior art cutting tool;
Figure 1B shows a conventional varying-width thread;
Figure 2A shows a cutting tool of a first embodiment of the invention, indicating dimensions;
Figure 2B shows the same cutting tool as Figure 2A, indicating different dimensions;
Figure 2C shows a perspective view of the cutting tool of Figure 2A;
Figure 2D shows a system using the cutting tool of Figure 2A;
Figure 3 depicts the steps of an example implementation of a first embodiment of the invention as a flow chart along-side schematic illustrations of the path of a cutting tool; and
Figure 4 shows a schematic comparison of the result of the prior art approach and that of embodiments of the invention.

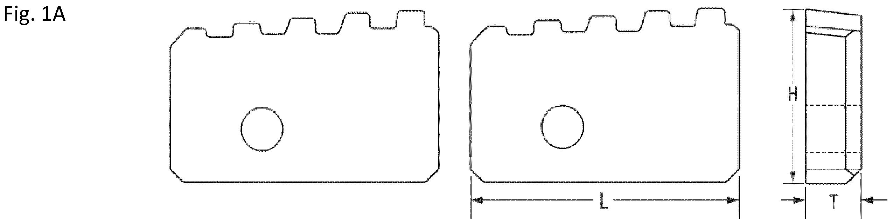

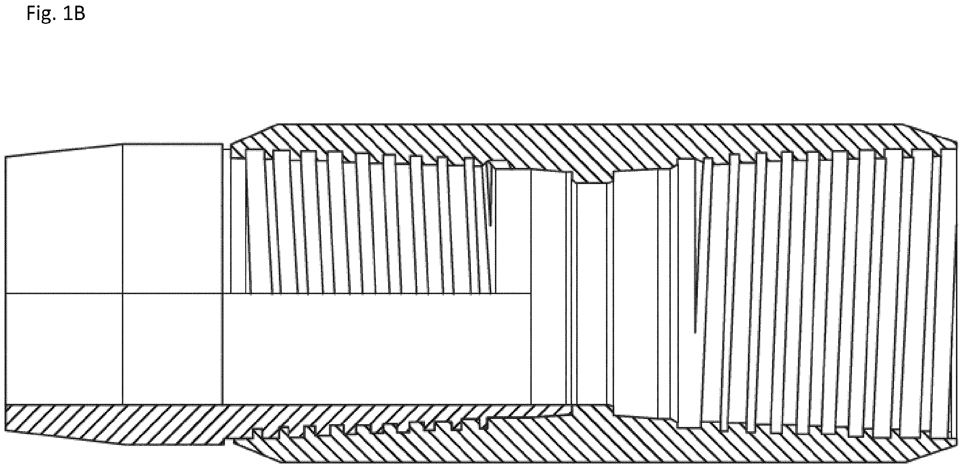

Figure 1A shows prior art cutting tools for cutting a buttress thread. The simple form of a buttress thread may be cut using a single tool having progressively taller teeth so that each subsequent tooth makes a deeper cut than the previous tooth. Figure 1B shows a threaded connection.

It is known in the art to provide prior art cutting tools specifically for cutting a varying-width thread. Typically, three tools are used for cutting, respectively, the stab flank, the root, and the load flank. Each tool will have progressively taller teeth along its length, with each subsequent tooth arranged to make a deeper cut than the previous tooth. The cutting tools can be used in sequence in order to remove material from a pipe end in order to form a thread.

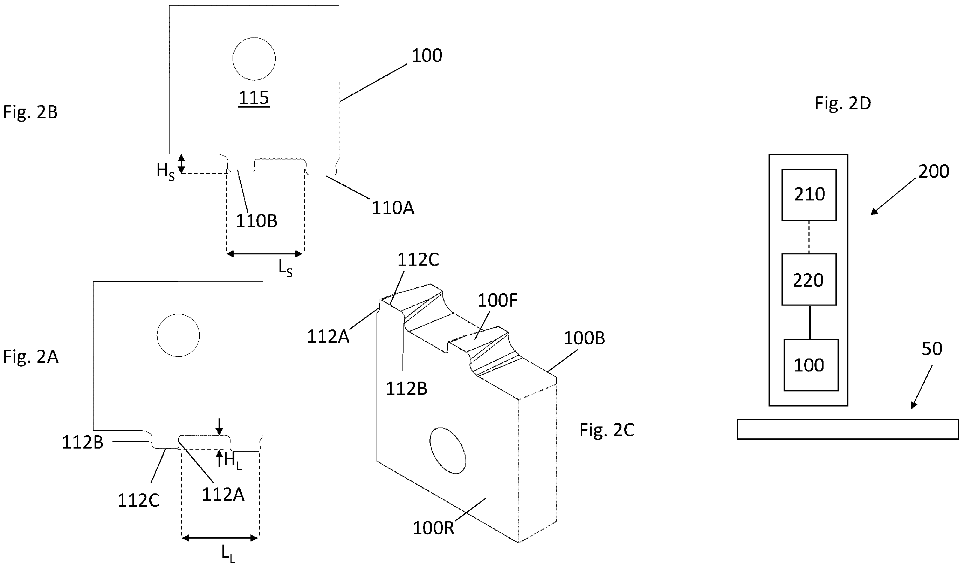

Figure 2A shows a first embodiment of cutting tool 100 in accordance with the invention. Figure 2B shows the same cutting tool, but with different dimensions depicted.

The cutting tool 100 is arranged for cutting a helical thread on a pipe. In preferred embodiments, cutting tool 100 may be used to cut a helical varying-width thread. A varying-width thread has a width (the distance between the stab flank and load flank of the thread form, measured along the pitch line) that varies along the length of the thread. The thread preferably increases in width in the axial direction from the tip of the respective member.

Although depicted with two teeth 110 110A, 110B, the cutting tool may have just one cutting tooth 110. However, a plurality of cutting teeth 110 is preferred.

It has been found that two teeth can provide a more accurate cut than one tooth, and three teeth can provide a more accurate cut than two tooth. While four teeth can provide a more accurate cut than three teeth, the improvement for a five-tooth cutting tool (or greater than five) is less significant. As such, it is preferred that the cutting tool has two or more teeth, preferably three teeth, more preferably four teeth.

The/each of the cutting teeth 110 has a stab flank cutting edge 112A for cutting a stab flank; and a load flank cutting edge 112B for cutting a load flank. The top of the/each tooth also defines a crest cutting edge 112C for cutting the base of a groove of a thread.

Figures 2A and 2B show a rake face 100R of the cutting tool. As can be seen from Figure 2C, the teeth 110A, 110B preferably taper away from the rake face 100R of the cutting tool 100. The tool 100 comprises a flank face 100F, meeting the rake face 100R along the cutting edges 112A, 112B, 112C of the cutting teeth 110A, 110B. The cutting tool comprises a back face 100B opposite the rake face 100R.

In this way, each cutting edge 112A, 112B, 112C has an internal angle between a rake face 100R of the cutting tool 100 and a flank face 100F in a plane perpendicular to the respective cutting edges 112A, 112B, 112C of less than 90 degrees.

More preferably, each cutting edge 112A, 112B, 112C has an internal angle between a rake face 100R of the cutting tool 100 and a flank face 100F in a plane perpendicular to the respective cutting edges 112A, 112B, 112C of less than 87 degrees.

In other words, the profile of the teeth 110A, 110B at the rake face 100R may be larger than the profile of the teeth 110A, 110B at the back face 100B.

As can be seen from Figures 2A and 2B, in contrast to the prior art cutting tools, each of the teeth 110 of the cutting tool 100 protrude from the main body 115 of the cutting tool 100 by the same tooth height.

For a tapered thread, this means that the sides of the teeth 110 of the cutting tool 100 that form the load flanks of the resulting thread all have a height H_{L}, while the sides of the teeth 110 of the cutting tool 100 that form the stab flanks of the resulting thread all have a height Hs.

Moreover, it is also preferred that each tooth 110 of the cutting tool 100 preferably has the same geometry. In relation to cutting teeth 110, the geometry involves the relative inclinations of the edges of the teeth and the shapes of the adjoining surfaces.

That is, the angles between the stab flank cutting edge 112A and the crest cutting edge 112C, and between the crest cutting edge 112C and the load flank cutting edge 112B are preferably the same for every tooth 110.

Preferably, the radii of curvature joining the stab flank cutting edge 112A to the crest cutting edge 112C and the radii of curvature joining the crest cutting edge 112C to the load flank cutting edge 112B are the same for every tooth 110.

As seen in Figures 2A and 2B, each of the stab flank cutting edges 112A are equally spaced from each other, and each of the load flank cutting edges 112B are equally spaced from each other. These spacings Ls and L_{L} may be identical for some thread forms.

However, for the purpose of cutting a varying-width thread, the spacings Ls between the stab flank cutting edges is different from the spacing between the load flank cutting edges L_{L}.

Preferably, the stab flank cutting edges 112A and/or the load flank cutting edges 112B is/are negatively inclined.

Whereas multiple teeth are provided with different geometries (in particular, different heights), and are used in the prior art to cut progressively deeper cuts, in the present invention, each tooth 110 on the cutting tool 100 has the same geometry. The first tooth 110A cuts the initial cut, with the following teeth 110B of the tool 100 ensure consistency of the cut surface.

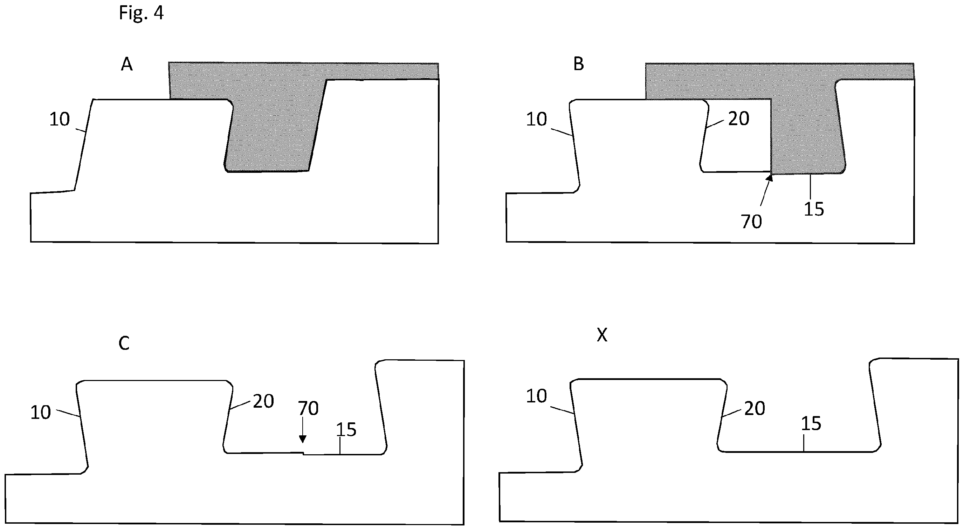

Moreover, since in the prior art, a different tool is used for cutting the stab flank and the load flank, the quality of the resulting groove is dependent upon the accuracy with which the two teeth were registered with the groove during their cutting pass. This can be seen from the sequence of schematic representations A, B, C shown in Figure 4. Here can be seen a pass of a first cutting tool in A cutting flank 10, a pass of a second cutting tool in B cutting flank 20, and the result of both passes in C, resulting in a small step 70 between the two parts of the base of the groove 15. The inaccurate registration of the two cutting tools can cause the presence of such discontinuities. In contrast, the inventive method results in the groove 15 in image X, which does not have any discontinuity resulting from lack of registration, since the same cutting tool 100 is used to cut the load and stab flanks 10. 20. Discontinuities between the cutting of load and stab flanks can also be caused by the misregistration of multiple cutting tools installed within a single machine (such as a lathe), where a first cutting tool cuts the load flank and a second cutting tool cuts the stab flank.

As shown in Figure 2D, the cutting tool 100 may be used in a system 200. The system comprises the cutting tool 100, a computer-controlled machine (such as a lathe) 220, and a controller 210 programmed to control the machine 220 to cut a helical thread on a pipe 50 by engaging the pipe 50 with the cutting tool 100 during relative motion of the pipe 50 and cutting tool 100, the relative motion including a rotation about the longitudinal axis of the pipe 50 and an axial displacement with respect to the longitudinal axis of the pipe 50. The controller 210 is programmed to determine the relative motion.

As is conventional, the machine 220 preferably engages the pipe 50 and rotates it, while the cutting tool 100 is moved to engage the rotating pipe 50 and translate longitudinally along its outer surface at a speed determined relative to the rotational speed of the pipe 50. However, any way of imparting relative motion is envisaged, such as, for example, rotating the tool 100 around the pipe 50 (which may be static).

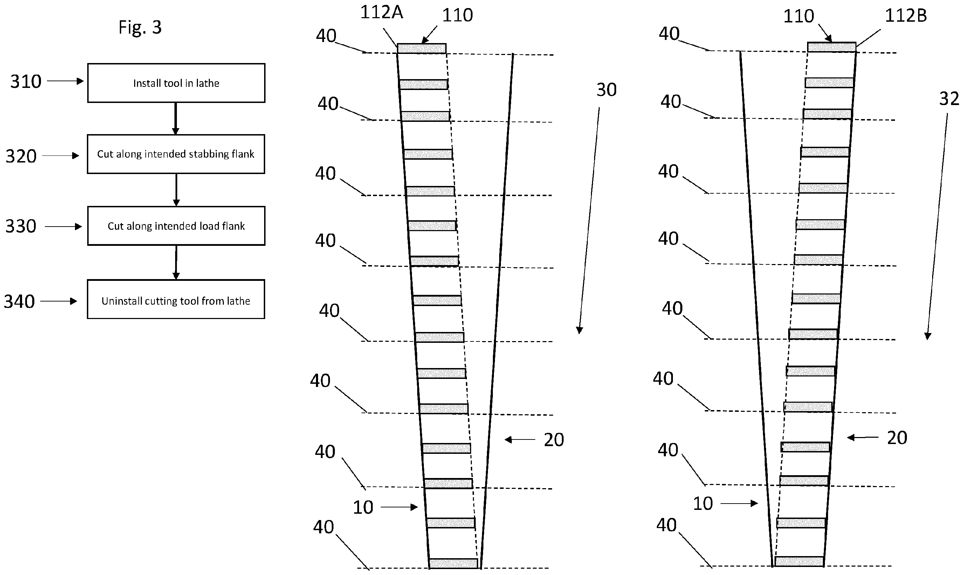

For the purpose of illustration, before presenting the first embodiment at its most general, a purely exemplary implementation thereof is discussed, shown in Figure 3. The steps of Figure 3 are alongside a graphical representation of the motion of a single tooth 110 of the cutting tool 100 (for example, the first tooth 110A).

The graphical representation depicts the unwrapped helical path of the thread resulting from the cutting operation. The resulting thread includes a stab flank 10 and a load flank 20. In this example, the to-be-cut thread is a varying-width thread, with the spacing of the stab flank 10 and load flank 20 reducing in the helical direction 30 (contrary to a free-running thread, for which the stab flank 10 and load flank 20 would be parallel). The horizontal dashed lines 40 depict a spacing of 360 degrees of rotation about the pipe 50. Although shown unwound, the stab flank 10 and load flank 20 on the pipe 50 would be aligned in the longitudinal direction but longitudinally offset (by the stab and load flank leads, respectively) at each dotted line.

Whereas a conventional approach to cutting a thread profile would be to use a different cutting tool to cut each flank, the method depicted in Figure 3 involves the steps of: providing a pipe 50 having a longitudinal axis; installing a cutting tool 100 in a computer-controlled machine 220 (such as a lathe); cutting a helical thread on the pipe 50 by cutting at least a portion of a stab flank 10 with a stab flank cutting edge 112A of a cutting tooth 110 and cutting at least a portion of a load flank 20 with a load flank cutting edge 112B of the same cutting tooth 110.

In some embodiments, the thread may include a run out at one or both ends. It may be the case that the flanks of the run out are cut using a different cutting tool. However, even in that case, the portion of the stab flank 10 will be cut with a cutting tooth 110 of the cutting tool 100, and the portion of the load flank 20 will be cut with the same cutting tooth 110 of the cutting tool 100. Preferably, the portion will be at least 80% of the length of the thread. In other embodiments the stab flank 10 and load flank 20 will extend the full length of the thread.

In Figure 3, there is set out a method of cutting a helical thread on a pipe 50, comprising: in a first step 310, installing a cutting tool 100 in a computer-controlled machine (such as a lathe) 220; in a second step 320, cutting a helical thread on the pipe by cutting at least a portion of a stab flank 10 with a stab flank cutting edge of a cutting tooth 110; in a third step 330, cutting at least a portion of a load flank 20 with a load flank cutting edge 112B of the same cutting tooth 110; and in a fourth step 340, removing the cutting tool from the machine.

Preferably, the method is for cutting a single helical thread along which all of the teeth of the single cutting tool 100 pass (in contrast with the teeth cutting of a single tool cutting different helical threads).

The fourth step 340 is optional. What is important is that the cutting tool 100 is not removed from the computer-controlled machine until both of the load flank 20 and stab flank 10 have been fully cut. That is, the cutting tool 100 does not need to be taken out of the computer-controlled machine 220 when cutting the load flank after cutting the stab flank (or vice versa) because, due to the presence of cutting edges 112A, 112B for both the stab and load flanks 10, 20, the cutting tool 100 can simply be axially displaced from a first position for cutting the stab flank 10 to a second position for cutting the load flank 20.

Preferably, as in Figure 3, the portion of the stab flank 10 is cut before the portion of the load flank 20 is cut. However, the converse is possible. That is, steps 320 and 330 may be reversed such that the at least a portion of the load flank 20 is first cut and then the at least a portion of the stab flank 10 is cut.

In the preferred, but non-limiting embodiment of Figure 3: in step 320, the pipe 50 is engaged with the cutting tool 100 during relative motion of the pipe 50 and cutting tool 100 to cut a continuous stab flank 10 in a single pass; and, in step 330, the pipe 50 is engaged with the cutting tool 100 during relative motion of the pipe 50 and cutting tool 100 to cut a continuous load flank 20 in a single pass.

Figure 3 is, however, non-limiting, and the flanks may be cut in any order.

As can be seen from Figure 3, preferably, the thread is a varying-width thread, with a width (measured in the longitudinal direction, parallel with the longitudinal axis of the pipe 50) that decreases away from the closest terminal end of the pipe 50.

Preferable embodiments are envisaged as defined by the following clauses:
Clause 1. A cutting tool for cutting a helical thread on a pipe, comprising one or more cutting teeth, wherein each of the one or more cutting teeth:
   has a stab flank cutting edge for cutting a stab flank; and
   has a load flank cutting edge for cutting a load flank.
Clause 2. A cutting tool according to clause 1, wherein the cutting tool comprises a plurality of cutting teeth.
Clause 3. A cutting tool according to clause 2, wherein:
   each of the stab flank cutting edges has the same height; and
   each of the load flank cutting edges has the same height.
Clause 4. A cutting tool according to clause 2 or clause 3, wherein:
   each of the stab flank cutting edges has the same geometry; and
   each of the load flank cutting edges has the same geometry.
Clause 5. A cutting tool according to any one of clauses 2 to 4, wherein:
   the stab flank cutting edges are equally spaced; and
   the load flank cutting edges are equally spaced.
Clause 6. A cutting tool according to clause 5, wherein the spacing between the stab flank cutting edges is different from, and preferably smaller than, the spacing between the load flank cutting edges.
Clause 7. A cutting tool according to any preceding clause, wherein the/each stab flank cutting edge is negatively inclined.
Clause 8. A cutting tool according to any preceding clause, wherein the/each load flank cutting edge is negatively inclined.
Clause 9. A cutting tool according to any preceding clause, wherein each of the one or more cutting teeth has a crest cutting edge for cutting a root of the helical thread.
Clause 10. A cutting tool according to any preceding clause, wherein each of the one or more cutting teeth has a crest cutting edge with an internal angle of less than 90 degrees, preferably less than 87 degrees.
Clause 11. A cutting tool according to any preceding clause, wherein each of the one or more cutting teeth has a load flank cutting edge with an internal angle of less than 90 degrees, preferably less than 87 degrees.
Clause 12. A cutting tool according to any preceding clause, wherein each of the one or more cutting teeth has a stab flank cutting edge with an internal angle of less than 90 degrees, preferably less than 87 degrees.
Clause 13. A system comprising a cutting tool according to any preceding claim, a computer-controlled machine (such as a lathe), and a controller programmed to control the machine to cut a helical thread on a pipe by engaging the pipe with the cutting tool during relative motion of the pipe and cutting tool, the relative motion including a rotation about the longitudinal axis and an axial displacement with respect to the longitudinal axis, wherein:
   the relative motion is controlled by the controller such that a tooth of the cutting tool cuts a helical thread on the pipe by cutting a stab flank with a stab flank cutting edge of a cutting tooth and cutting a load flank with a load flank cutting edge of the same cutting tooth.
Clause 14. The system of clause 13, wherein the relative motion is controlled by the controller such that a tooth of the cutting tool cuts a varying-width helical thread on the pipe.
Clause 15. The system of clause 13 or clause 14, wherein:
   the relative motion is controlled by the controller such that the cutting tool carries out two passes;
   in one of the two passes, the cutting tool cuts the stab flank; and
   in the other of the two passes, the cutting tool cuts the load flank.
Clause 16. A method of cutting a helical thread on a pipe, comprising the steps of:
   providing a pipe having a longitudinal axis;
   installing a cutting tool in a computer-controlled machine (such as a lathe);
   cutting a helical thread on the pipe by cutting at least a portion of a stab flank with a stab flank cutting edge of a cutting tooth and cutting at least a portion of a load flank with a load flank cutting edge of the same cutting tooth.
Clause 17. The method of clause 16, wherein the cutting tool is not removed from the computer-controlled machine until both of the load flank and stab flank have been cut.
Clause 18. The method of clause 16 or clause 17, wherein:
   the at least a portion of the stab flank is first cut and then the at least a portion of the load flank is cut; or
   the at least a portion of the load flank is first cut and then the at least a portion of the stab flank is cut.
Clause 19. The method of any one of clauses 16 to 18, wherein the helical thread is cut by:
   engaging the pipe with the cutting tool during relative motion of the pipe and cutting tool to cut a continuous stab flank in a single stab flank pass; and
   engaging the pipe with the cutting tool during relative motion of the pipe and cutting tool to cut a continuous load flank in a single load flank pass.
Clause 20. The method of any one of clauses 16 to 19, wherein the thread is a varying-width thread.
Clause 21. The use of the cutting tool of any one of clauses 1 to 12 for cutting a varying-width thread.
Clause 22. The use of the cutting tool of any one of clauses 1 to 12 for cutting a single varying-width thread.
Clause 23. The method of any one of clauses 16 to 20, wherein the cutting tool is the cutting tool of any one of claims 1 to 12.

## Claims

1. A cutting tool for cutting a helical thread on a pipe, comprising one or more cutting teeth, wherein each of the one or more cutting teeth:
has a stab flank cutting edge for cutting a stab flank; and
has a load flank cutting edge for cutting a load flank.

2. A cutting tool according to claim 1, wherein the cutting tool comprises a plurality of cutting teeth.

3. A cutting tool according to claim 2, wherein:
each of the stab flank cutting edges has the same height; and
each of the load flank cutting edges has the same height.

4. A cutting tool according to claim 2 or claim 3, wherein:
each of the stab flank cutting edges has the same geometry; and
each of the load flank cutting edges has the same geometry.

5. A cutting tool according to any one of claims 2 to 4, wherein:
the stab flank cutting edges are equally spaced from each other; and
the load flank cutting edges are equally spaced from each other.

6. A cutting tool according to claim 5, wherein the spacing between the stab flank cutting edges is different from, and preferably smaller than, the spacing between the load flank cutting edges.

7. A cutting tool according to any preceding claim, wherein the/each stab flank cutting edge is negatively inclined.

8. A cutting tool according to any preceding claim, wherein the/each load flank cutting edge is negatively inclined.

9. A system comprising a cutting tool according to any preceding claim, a computer-controlled machine, and a controller programmed to control the machine to cut a helical thread on a pipe by engaging the pipe with the cutting tool during relative motion of the pipe and cutting tool, the relative motion including a rotation about the longitudinal axis and an axial displacement with respect to the longitudinal axis, wherein:
the relative motion is controlled by the controller such that a tooth of the cutting tool cuts a helical thread on the pipe by cutting a stab flank with a stab flank cutting edge of a cutting tooth and cutting a load flank with a load flank cutting edge of the same cutting tooth.

10. The system of claim 9, wherein the relative motion is controlled by the controller such that a tooth of the cutting tool cuts a varying-width helical thread on the pipe.

11. The system of claim 9 or claim 10, wherein:
the relative motion is controlled by the controller such that the cutting tool carries out two passes;
in one of the two passes, the cutting tool cuts the stab flank; and
in the other of the two passes, the cutting tool cuts the load flank.

12. A method of cutting a helical thread on a pipe, comprising the steps of:
providing a pipe having a longitudinal axis;
installing a cutting tool in a computer-controlled machine;
cutting a helical thread on the pipe by cutting at least a portion of a stab flank with a stab flank cutting edge of a cutting tooth and cutting at least a portion of a load flank with a load flank cutting edge of the same cutting tooth.

13. The method of claim 12, wherein the cutting tool is not removed from the computer-controlled machine until both of the load flank and stab flank have been cut.

14. The method of claim 12 or claim 13, wherein:
the at least a portion of the stab flank is first cut and then the at least a portion of the load flank is cut; or
the at least a portion of the load flank is first cut and then the at least a portion of the stab flank is cut.

15. The method of any one of claims 12 to 14, wherein the helical thread is cut by:
engaging the pipe with the cutting tool during relative motion of the pipe and cutting tool to cut a continuous stab flank in a single stab flank pass; and
engaging the pipe with the cutting tool during relative motion of the pipe and cutting tool to cut a continuous load flank in a single load flank pass.
